# EUROPEAN PATENT APPLICATION

(11) **EP 3 531 356 A1**
(43) Date of publication of application: **28.08.2019**
(21) Application number: 18382102.4
(22) Date of filing: 21.02.2018
(51) Int. Cl.: G06Q 20/10, G07F 19/00, G06Q 20/32

(54) **METHOD FOR OPERATING WITH AN AUTOMATED TELLER MACHINE**

(71) Applicant: Banco Bilbao Vizcaya Argentaria, S.A., 48005 Bilbao (ES)
(72) Inventor: FERNÁNDEZ FREIRE, José Ángel, E-28050 Madrid (ES); SALAZAR LÓPEZ, Carlos, E-28050 Madrid (ES); RODRÍGUEZ BRAVO, Álvaro, E-28050 Madrid (ES); FELIP MEZCUA, Pedro Pascual, E-28050 Madrid (ES); PÉREZ DE LA BELLA, Alejandro, E-28050 Madrid (ES); BARRI VILARDELL, Ignasi, E-08174 Sant Cugat del Vallès-Barcelona (ES); AMADOR LÓPEZ, Francisco José, E-08174 Sant Cugat del Vallès-Barcelona (ES)
(74) Representative: ABG Intellectual Property Law, S.L.

(57) **Abstract**

The present invention provides a computer-implemented method for operating with an Automated Teller Machine by means of a portable communications device of a user, wherein the ATM is configured to send instructions to the application of the portable communications device in order to be followed by the user, and through the communication channel.

## Description

### TECHNICAL FIELD OF THE INVENTION

The present invention belongs to the field of automated teller machines, ATM, and particularly, it belongs to the field of making the operation of automated teller machines accessible to users with reduced capacities, especially to visually impaired users.

The invention provides a method and a data processing system for allowing a user to operate with an ATM by means of its portable communications device.

### BACKGROUND OF THE INVENTION

Automated teller machines are well-known electronic bank devices which enables users to perform a wide range of financial transactions, such as cash withdrawals, deposits, transfers, or updating account information. The main advantage of operating with ATM is their availability at any time, without direct intervention of bank staff.

Due to such lack of direct intervention of bank staff in operations with the ATMs, users with reduced capacities come across with an accessibility barrier. Thus, the operation by such users is highly difficult, giving rise to a negative perception of the same.

Nevertheless, users with reduced capacities, especially visually impaired users, finally become familiar with ATM operations as they could interact through the physical buttons of their displays to follow the given instructions. Such physical buttons provided textured indicators to assist visually impaired users.

In a broad sense, attempts were performed to overcome such accessibility barrier. For example, attention is drawn on one hand to the audio card integrated within the ATM hardware, and on the other hand to access for headphone jack connectors typically used for audio signals.

However, according to the high implementation of ATMs in the last decades, the present ATMs installed represent a heterogeneous hardware park in antiquity (normally from 0 to 8 years), and in types. Therefore, it is not possible to assure that all the audio cards integrated within the ATM hardware are full-operative as ATMs may be subjected to maintenance interventions which inadvertently disconnects said audio cards.

Furthermore, as most of ATMs are intended to be exposed, access for headphone jack connectors are in most cases damaged or malfunctioning, possibly due to vandalism or also maintenance interventions. Nevertheless, in case the access for a headphone jack connector properly works, its use by a user with reduced capacities, especially by a visually impaired user, leads to a situation of tension and lack of control, which negatively impacts in the perception of said user.

Recently, along with digitalisation of ATMs, their displays are being changed to *touch screens* which emphasize the accessibility barrier of users with reduced capacities, as the physical buttons became virtual ones. Since such users lose the former reference of physical buttons, this prompts the operation of ATMs to be inaccessible to such users.

Although ATMs operations are highly regulated due to their inherent safety and security levels, there is a need in the industry to make them accessible to any user, whilst such safety and security levels are safeguarded.

### SUMMARY OF THE INVENTION

The present invention provides a solution for the aforementioned problems, by a computer-implemented method for operating with an Automated Teller Machine according to claim 1, and a data processing system according to claim 15. In dependent claims, preferred embodiments of the invention are defined.

In a first inventive aspect, the invention provides a computer-implemented method for operating with an Automated Teller Machine, ATM, by means of a portable communications device of a user, wherein:
- the ATM is configured to communicate with a server host,
- the portable communications device is configured to send at least one instruction to the user and to store and run at least one application, and
- the at least one application is configured to communicate the portable communications device with the server host,
the method comprising the steps of:
a) posting by the application of the portable communications device an operation request to a database of the server host, wherein such operation request remains pending;
b) detecting by the ATM a personal identifying item of the user,
c) authenticating the user,
d) checking by the ATM whether there is a pending operation request associated to the user in the database of the server host; wherein:
   if an operation request associated to the user is pending:
      d1) establishing a communication channel between the ATM and the portable communications device;
      d2) sending by the ATM to the application of the portable communications device and through the communication channel, at least one instruction to be followed by the user; and
         if the ATM recognizes that at least one instruction has been executed, then
      d3) performing by the ATM the operation requested.

Throughout this entire document, a user will be understood as any customer or member that receives a service from the bank or organisation that owns such ATM. It is noted that the 'user' may be also a group of users which intends to operate with the ATM collectively.

Although any user may be addressed by the present invention, special attention is drawn to blind users, users with a serious visual impairment, users with special needs, or even a user with limited access or habit to technologies such as elderly people.

The main advantage of the present invention is the overcoming of the accessibility barrier present in the state of the art since the interface between user and ATM is now the portable communication device of such user instead of the *touch screens* of the ATM. The present invention allows the user to operate with the ATM by its personal portable communication device which is accustomed to using.

A person skilled in the art will notice that the portable communication device of the user may be any hand-held electronic device which is configured to communicate with the user, and further to store and run an application, preferably by a hosted operating system. Despite the most representative example is a cellular telephone, other examples such as Smartphone, tablet, laptops, or smartwatch may be envisaged.

Any of the above examples of portable communication devices allows the user to launch the 'operation request' at a safe environment. Hence, performing the 'operation requested' *per se* is left to the ultimate instant of time where the user needs to displace himself to the ATM location. As a consequence, the time spent in the ATM location is drastically reduced, along with the situation of tension and lack of control.

As can be easily inferred, the present invention defines two main processes:
1) the posting by the application of the portable communications device an 'operation request' to a database of the server host which afterwards shall be identified by the ATM, and
2) upon identification of the 'operation request', the communication established between the ATM and the portable communications device by a communication channel.

Throughout this entire document, the server host will be understood as the technological system wherein the banking logic of the entity is stored. Although the server host may be hosted across different architectures and sub-systems, it is considered in its entirety as a unique facility. Among others, the server host stores stock market information, financial information of users, and their personal information.

In accordance, the at least one application is configured to communicate the portable communications device with the server host, which stores financial personal information of the user. Consequently, the posting of an 'operation request' is preferably allocated to a database of the server host in a personalized manner for such user, wherein such operation request remains pending. After, where the ATM checks whether there is a pending operation request associated to the user in such database in step d), the ATM recognizes that such personalized 'operation request' comes from a user which needs to operate with the ATM by means of its portable communications device.

Preferably, the server host, or the bank entity *per se,* already knows that such user requests to perform the method according to the invention, since its portable communication device already stores such application, which is intended to that purpose. Accordingly, such order is to be treated differently to notice the ATM.

The server host is also called as "backend" as it is normally maintained unchanged, except for minor corrections. Therefore, they are normally programmed in classic, well tested, and robust programming language such as COBOL, which makes difficult their access from and interaction with other newer technologies.

Further, the present invention defines a multitier architecture which allows a multi-channel communication and the ubiquity of information at the convenience of the user. In software engineering, the multitier architecture refers to client-server architecture in which presentation, application processing, and data management functions are physically separated.

Particularly, the present invention defines a three-tier architecture for the second process, which is represented by:
- the portable communication device;
- the communication channel; and
- the ATM, which is configured to communicate with a server host.

In software programming, architecture such as any of the above architectures of the three-tier architecture is considered as a software layer which offers common features to all the parts supported thereon. Examples of common features may be traceability, security, access control, homogenization and reporting.

Advantageously, the use of the former three-tier architecture allows multi-channel communication. Multi-channel should be understood as the ability of a service to be invoked across different communication channels (or associated electronic devices) through an architecture. Historically, in banking terms, invoking of such service -*'operation request'-* may be *on-site,* through an ATM, computer or laptop, tablet or smartphone, phone network, or the like.

According to the invention, the ATM only performs the operation requested in case such ATM recognizes that at least one instruction has been performed by the user and the ATM identifies that it is executed. For example, instructions sent may be either for informative purposes such as *"please, wait",* or it is expected by the ATM an interaction from the user, such as *"now, please pick up your card".*

For security reasons, according to the invention, in case the ATM recognizes that such at least one instruction has not been executed, the ATM does not performs the operation requested.

In a preferred embodiment, the operation with the ATM is performing a financial transaction, preferably a cash dispensing. Therefore, in step d3) the ATM dispenses cash according to the amount specified in the 'cash dispensing order'. Later on, the user is in position to withdraw the cash following instructions by the portable communication device.

Optionally, the authentication step in step c) of the method may be validly performed after or before any of the step d1) to d2), but always before the step d3) of performing the operation requested, for security reasons.

In a particular embodiment, the communication channel established in step d1) between the ATM and the portable communications device is through at least one Application Program Interface, API.

In this embodiment, the communication channel is established by an internal consumption API, ruled by an internal API library in order to select the proper API service. Hence, the ATM and the portable communications device are configured to communicate through at least one API service.

Advantageously, the API service provides an interface between ATM and the portable communications device, each being really different in architecture making unable a *priori* their direct communication. Therefore, the API may be understood a software part which enables the communication between two architectures without regard the technology they use.

In a particular embodiment, step d2) further comprises the steps of:
d2.1)sending by the ATM the at least one instruction, such instruction being stored in an In-Memory Database, IMDB, as a codified digital information, and
d2.2)requesting by the portable communications device the codified digital information posted in the In-Memory Database.

The codified digital information is the *so-called* 'tokenAPP' which obfuscates the instruction so that it only has validity for the declared parties of the communication, *i.e.* the ATM and the portable communication device.

The use of an In-Memory Database, or IMDB, for storing the codified digital information advantageously allows using a volatile storage medium for such non-durable information which is useful or only necessary until requesting by the portable communications device.

Furthermore, the In-Memory Database provides very high access speed thereto. Therefore, the time incurred within the step of sending by the ATM to the application of the portable communications device at least one instruction (*i.e.* step d2) is drastically reduced in comparison with others regular databases such as *Oracle Database* ®.

As a consequence, unlike conventional or regular databases in which a 'lag' (or "delay") of few seconds normally took place, by the use of an In-Memory Database the instruction to be followed by the user is perceived almost immediately. Thus, the user, especially those users with a visual impairment, can follow accordingly the instructions received as there is no notable delay between steps.

In this sense, users with reduced capacities, especially visually impaired users are habituated to interact with their portable communications device very quickly as the method of introduction is formed by tactile shortcuts, and the instruction reception is audible based. As it can be seen, minor deviations in their interactions times, at which such users are accustomed, leads to a negative perception of the operation with the ATM and missing of their experience.

Such experience may be defined, in broad terms, as the set of factors and elements which relates to the operation of the user with the ATM which results in either a positive or negative perception of such operation. Consequently, the method according to the invention achieves a positive perception of the user.

In a particular embodiment, the requesting in step d2.2) is performed continuously in a "busy-wait polling" process.

A *'busy-wait polling'* is understood as a process through which the portable communication device inquiries or consult constantly the In-Memory Database for checking whether a codified digital information is posted intended to be retrieved by such portable communication device. Preferably, the requesting is synchronized with the posting of codified digital information.

In a particular embodiment, It the requesting in step d2.2) is performed in an asynchronous process wherein such instructions to be followed by the user are 'actually pushed notifications'. Those instructions named 'actually pushed notifications' have a similar result than the conventional 'push notifications', but the technology used differs considerably.

According to the invention, the use of conventional 'push notifications' are not permissible as they are exposed to public servers which may rise vulnerability issues. Moreover, due to the quick assimilation of the instruction by the users, and the lack of control of the sending of 'push notifications', it leads to a backlog of notifications in the portable communications device which may mislead the user.

On the contrary, the 'actually pushed notifications' differs from the conventional 'push notifications' in that they are sent and controlled by an internal server of the server host, such internal server being intended solely to manage the 'actually pushed notifications'. Advantageously, this increases the performance of the asynchronous requesting of instructions, along with the speed, reliability and security of 'actually pushed notifications' received by the portable communications device.

Also, 'actually pushed notifications' are more consistent with the quick assimilation of the instruction by the visual impairment users.

In a particular embodiment, the portable communications device is configured to reproduce text-to-speech instructions and wherein step d2) further comprises:
- receiving at least one text-to-speech instruction by the portable communications device, and
- reproducing audibly the at least one text-to-speech instruction by the portable communications device.

Preferably, the application of the portable communications device is configured to receive said instruction, transform it into a text-to-speech message and reproducing audibly the same.

Nevertheless, such application may be the same application already stored, a further application and/or a combination thereof. Also, each of such applications may be a native application or a web application.

Therefore, in this embodiment the text-to-speech instruction may be pre-established as a sentence. In case more than one instruction to be followed by the user is considered, the sentences may differ according to the 'operation requested' and/or the expected act from the user in an act chain. Accordingly, the text-to-speech instruction is audibly dictated to the user by the portable communications device.

Alternatively, the text-to-speech instruction may be in accordance to a *beep* code, which shall be audibly reproduced afterwards.

In a particular embodiment, at least one instruction sent by the ATM to the portable communication device is deleted after a period of time is elapsed. In addition, such deletion of at least one instruction is done in case the instruction is not sent to the portable communication device in said period of time, *i.e.* in case such instruction is not forwarded to the portable communication device.

Advantageously, this avoids the sending of the same instruction to the application of the portable communications device twice, which probably confuses the user.

In addition, if the at least one instruction is stored in an In-Memory Database as a codified digital information, this deletion of instructions is of special importance due to the limited memory resources of the In-Memory Database.

In a particular embodiment, the step d2) of the method further comprises:
- determining the length of a message to be communicated to the user as an instruction,
- relating such length of the message with a period of validity thereof, and
- deleting the instruction posted in the In-Memory Database and related to such message upon its period of validity expires.

Thus, upon said period of validity has expired, the at least one instruction posted in the In-Memory Database by the ATM is deleted.

In a particular embodiment, the length of the message to be communicated to the user is determined by a number of words the instruction.

In another embodiment, the length of the message to be communicated to the user is determined by alphanumeric characters.

In a preferred embodiment, the message to be communicated to the user as an instruction is a sentence, the length of which is determined by its number of letters.

The period of validity of the message is therefore calculated by the expression *(no. letters of the message)*0.4 sec.* Accordingly, upon said period of validity has expired, the at least one instruction posted in the In-Memory Database by the ATM is deleted.

In a particular embodiment, the codified digital information posted in the In-Memory Database is requested periodically by the portable communications device within the period of validity of the message related to such instruction.

In a preferred embodiment, the step d2.2) is performed each 1 second. In case the portable communications device detects that no further codified digital information has been posted in the In-Memory Database by the ATM, the step d2.2) is performed by default each 8 seconds.

In a particular embodiment, the personal identifying item of the user detected in step b) by the ATM is at least one of the following:
- personal ATM card,
- portable communications device, or
- a combination of the above personal identifying items.

Advantageously, this provides a safety barrier in order to ensure that the user intended to operate with the ATM is actually the proper owner of an account according to the server host data. It is to be noted that personal identifying item identifies the user uniquely, and although the same might change between the posting of the operation request (step a) and the detection thereof (step b), the ATM detects that such user is actually the proper owner of an account according to the server host data. In such possible scenario, the changed personal identifying item of the same user is associated with the former pending operations.

Also, by the detection of the personal identifying item of a user, the ATM recognizes that the owner of such personal identifying item has posted an 'operation request' in the database of the server host in a personalized manner. Besides, the ATM checks that such personalized 'operation request' associated to the user remains pending.

It is to be noted that both the personal ATM card and the portable communications device, used as a personal identifying item of the user to be detected by the ATM, may use any communication protocols such as near-field communication, NFC. It is to be noted that the communication protocol of the portable communications device is to be associated to a personal identifying number of the user (such as account number or ATM card number), which will be stored in the application thereof.

In a particular embodiment, the authentication of the user performed in step c) comprises any of the following types:
- typing a personal identification number, PIN, on a PIN pad of the ATM,
   and/or
- typing a personal identification number on a screen or keyboard of the portable communications device, and/or
- introducing biometric information, preferably scanning a fingerprint.

Preferably, the authentication of the user performed in step c) comprises typing a PIN on a PIN pad of the ATM. Advantageously, this allows encrypting by means of hardware the information sent when the ATM checks whether there is a pending operation request associated to the user, which provides a higher level of security.

In a particular embodiment, a display of the ATM and/or a screen of the portable communications device is configured to switch its lay-out and colours to a particular lay-out and colours according to a pre-established requirements of the user.

This embodiment is of special interest to those users which retains a certain grade of visual ability. The combination of the method according to the invention and an accessible display produces a synergistic effect which facilitates the user to operate with the ATM.

In a particular embodiment, the method further comprises between steps a) and b), the step of:
i. indicating by the application of the portable communications device the geolocation of ATMs and the geolocation of the portable communications device itself,
ii. selecting a particular ATM where the financial transaction is to be performed, and
iii. calculating the route according to the geolocation of the selected ATM and the portable communications device itself.

In a preferred embodiment of the previous embodiment, further comprises a step iv reproducing audibly the route by the portable communications device.

In a particular embodiment, step d2) further comprises that the ATM and the portable communications device comprise means to communicate by personal area networks (PANs) such as Bluetooth.

Additionally, the process of authenticating the user in step c) by typing its personal identification number on the screen or keyboard of its portable communications device can be communicate to the ATM by PAN.

Alternatively, such process of authenticating the user in step c) may be done by *Wi-Fi.*

In a second inventive aspect, the invention provides a data processing system comprising means for carrying out the steps of the method of any of the embodiments of the first inventive aspect.

In a third inventive aspect, the invention provides a computer program comprising instructions which, when the program is executed by a computer, cause the computer to carry out the steps of the method of any of the embodiments of the first inventive aspect.

In a fourth inventive aspect, the invention provides a computer-readable medium comprising instructions which, when executed by a computer, cause the computer to carry out the steps of the method of any of the embodiments of the first inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a flowchart with the method for operating with an ATM by means of a portable communications device of a user, according to the invention.
- Figure 2: This figure shows an example of the communication channel between the ATM and the portable communications device.
- Figure 3: This figure shows a flowchart with the protocol for deleting the instructions sent by the ATM to the portable communication device.
- Figure 4: This figure shows a particular example of the posting by the application of the portable communications device an 'operation request' to a database of the server host.
- Figure 5: This figure shows a particular example of the method for operating with an ATM by means of a portable communications device of a user through a communication channel.
- Figure 6: This figure shows a particular example of a special workflow of instructions sent by the ATM to the portable communications device by the communication channel when the operation request is a cash withdrawal.
- Figure 7a-7b: These figures show examples of the display of the screen of the portable communications device with a particular lay-out and colours according to pre-established requirements of the user.

### DETAILED DESCRIPTION OF THE INVENTION

As it will be appreciated by one skilled in the art, aspects of the present invention may be embodied as a method, data processing system or a computer program.

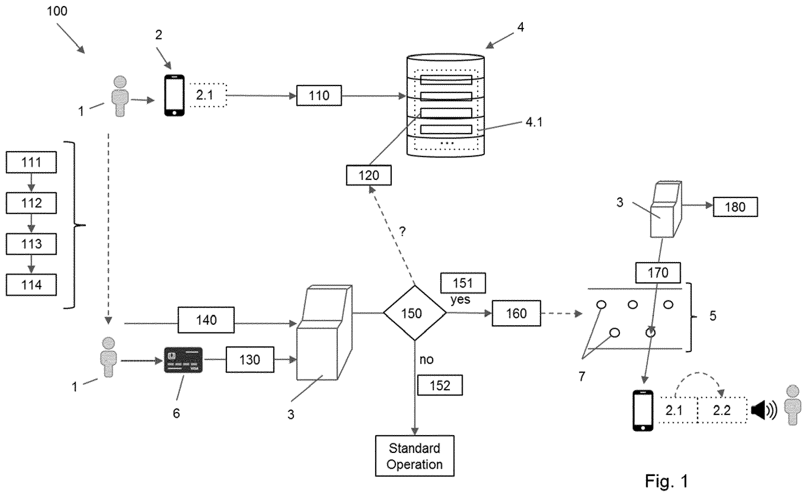

Figure 1 depicts a schematic flowchart with the main steps of the method (100) for operating with an ATM (3) by means of a portable communications device (2) of a user (1). Throughout this example, the user (1) will be a visually impaired user.

The portable communications device (2) is preferably a cellular telephone with a hosted operating system such as Android or iOS, which is configured to send instructions to the user (1), to store and run applications, and in addition to have Internet connection. At least one application is a native app configured to communicate the portable communications device (2) with the server host (4).

The first process of the method according to the invention is the posting (110) by the application of the portable communications device (2) an 'operation request' to a database (4.1) of the server host (4) which afterwards shall be identified by the ATM (3). As it was already discussed, the visually impaired user (1) can perform this first process at a safe environment, such as home or workplace.

In this sense, such application of the portable communications device (2) posts (110) an 'operation request' at a database (4.1) of the server host (4) in a personalized manner for such user (1). This is to say, the server host (4), or the bank entity *per se,* already knows that such user (1) has a visual impairment, and if an 'operation request' is posted from an application to that purpose, such order is treated differently to notice the ATM (3) when requesting the same.

The 'operation request' can be either posted (110) at a special database of the server host (4) or indexed in a personalized manner to allow identification later-on by the ATM (3), both actions being understood as equivalent.

Throughout this example, the 'operation request' will be a financial transaction, preferably a cash withdrawal. In case the 'operation request' is a cash withdrawal, the order sent from the application should be just the cash amount to be withdrawn, which will be booked in the server host (4) for that purpose. Preferably, the selection of the actual ATM (3) to perform the cash dispensing remains undefined. According to the invention, such 'operation request' *-cash withdrawal-* remains pending (120).

It is to be noted that the cash amount to be withdrawn is merely booked, not actually deducted from the financial account of the user (1). The deducting will only be effective upon dispensing from the ATM (3).

In addition, once the cash withdrawal request has been posted, the native app (2.1) of the portable communications device (2) is configured to indicate (111):
- the geolocation of ATMs (3) in the neighbouring on a layer and
- the geolocation of the portable communications device (2) itself on another layer, and
then superposing both. Such geolocations are normally performed by means of an API (7) service.

Once the geolocation of neighbouring ATMs (3) is presented along with the geolocation of the portable communications device (2) itself, it is selected (112) a particular ATM (3) where the cash withdrawal is to be performed. Accordingly, a route from the geolocation of the portable communication device (2) of the user (1) (presumably a safe environment, such as home or workplace) to the selected ATM (3) is calculated (113), and shown preferably on the screen.

Optionally, (114) the portable communication device (2) may use an API (7) service to guide the user (1) through the calculated route, whilst reproducing the same audibly to help the visually impaired user (1).

Despite an ATM (3) has been selected to perform the cash withdrawal, there has been no interaction with the server host (4) and therefore the 'operation requested' posted in its database remains still pending (120). Accordingly, the cash amount has not been deducted from the financial account of the user (1) yet.

Hereafter, once the user (1) reaches the ATM (3), the ATM (3) detects (130) a personal identifying item (6) of said user(1), preferably its personal ATM (3) card. The ATM recognizes (150) that the owner of such personal ATM card has posted an 'operation request' in the database of the server host (4) in a personalized manner. As the ATM (3) verifies that such personalized 'operation request' associated to said user(1) remains pending, a special workflow is triggered (151).

It should be noted that, unless the ATM (3) recognizes that the owner of such personal identifying item (6) has posted an 'operation request' in a personalized manner, the special workflow shall not be triggered (152).

The ATM (3) automatically detects that the user(1) intended to operate with requires such special workflow (151), because an order of cash withdrawal associated to the user (1) is pending (120).

Consequently, a communication channel (5) between the ATM (3) and the portable communications device (2) is established (160). In other words, the portable communications device (2) is responsible for transmitting the instructions sent by the ATM (3) to the user (1).

The ATM (3) sends (170) through the communication channel (5) to the application, at least one instruction to be followed by the user (1). For example, an instruction to be sent to the user (1) may be a request to authentication, such as: *"Please, enter your PIN code".*

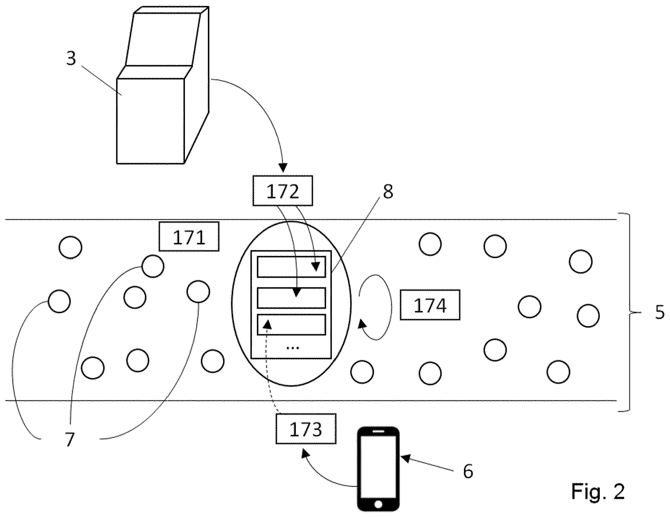

Such instruction that formerly in the prior art is shown in the display of the ATM (3), in the present method is transmitted from the ATM (3) to the portable communication device (2) through the communication channel (5). Details of this communication channel (5) are defined in figure 2.

Preferably, the portable communications device (2) is configured to reproduce text-to-speech instructions. Once the instruction is received by the portable communications device (2) as a text-to-speech instruction, the instruction is reproduced audibly.

In this sense, once the instruction is on the portable communications device (2) end, it is sent to its operating system in order to dictate the message out loud by the text-to-speech technology. Examples of text-to-speech technologies are VoiceOver within iOS, and TalkBack within Android.

It should be noticed that, according to this example, the last instruction to be sent to the user (1) may be as follows: *"Please, withdraw your money*"

Shortly, the ATM (3) performs the operation requested (180), in this case the cash dispensing.

Figure 2 shows an example of the communication channel (5) between the ATM (3) and the portable communications device (2). As it was already stated, this process is the second process of the method represented by the architecture:
- the portable communication device (2);
- the communication channel (5); and
- the ATM (3), which is configured to communicate with a server host (4).

In the steps of the method according to the invention, once the user (1) reaches the ATM (3), and the ATM (3) recognizes that the owner of the personal identifying item (6) has posted (110) an 'operation request' in the database of the server host (4) in a personalized manner (which remains pending (120)), a special workflow for the communication channel (5) is triggered (151).

The communication channel (5) is established by an by an internal consumption API, wherein the ATM (3) and the portable communications device (2) are configured to communicate through at least one API (7) service.

Firstly, the ATM (3) invokes such internal consumption API, which through the API (7) service generates codified digital information, henceforth called *tokenAPP.* Said tokenAPP is obfuscation in the concatenation of various variables taking part in the process, and which serves as a distinct attribute about the operation of a single user(1). Preferably, the tokenAPP is independently of the portable communication device (2), but it depends on the user (1) and the cash amount booked.

As the tokenAPP is generated within the by the internal consumption API structure, there is a seed Token, *i.e.* the ATM (3) at the instant the cash withdrawal is booked. This tokenAPP will apply for all the instructions within the communication channel (5).

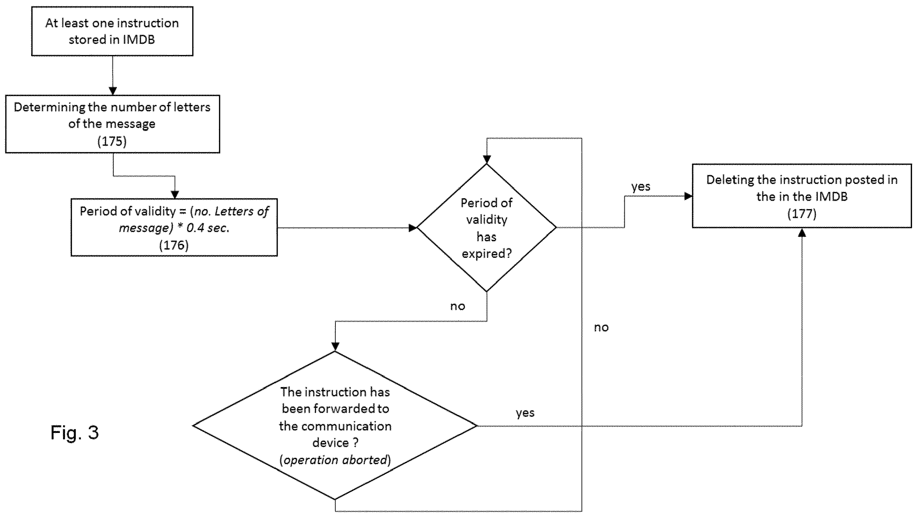

The ATM (3) sends the codified digital information to an In-Memory Database to be stored therein in a *'postMessage'* process. For a specified time, the information inserted by the ATM (3) shall persists until certain criteria applies. Details of these criteria are defined in figure 3.

During the time the application of the portable communications device (2) is running, it is requesting the codified digital information posted in the In-Memory Database in a *'getMessage'* process. This is to say, the portable communications device (2) performs a "busy-wait polling" process inquiring whether any kind of message related to such device (2) (and hence to such user (1)) is available.

It is to be noted that the sending of instructions to the In-Memory Database (8), IMDB, is produced asynchronously, *i.e.* without poll-message, being the portable communications device (2) of the user(1) in charge of providing a lexical direction among them. Preferably, this lexical direction is established in the application thereof.

Figure 3 shows a flowchart with the protocol for deleting and discarding (174) the instructions sent by the ATM (3) to the portable communication device (2).

According to the foregoing, the deletion and/or discarding of instructions which are not forwarded to the portable communications device (2) is of special interest to avoid the request of old instructions which may be de-synchronized with the 'operation request' performed.

As it was explained, upon insertion (172) of the codified digital information to an In-Memory Database to be stored therein by the ATM (3), the application of the portable communications device (2) requests such instructions corresponding to itself. Such instructions are text-to-speech instructions sent to the operating system to be dictated out loud by its text-to-speech technology.

Then, the instructions stored in the In-Memory Database do not receive an automatic deleting order. Instead, each 1 second it is produced a new request from the application. In case an instruction is still stored, it is dictated out loud once again by the text-to-speech technology as a reminder. Otherwise, *i.e.* when it is detected that no instructions are stored, the request from the application is produced each 8 seconds.

Nevertheless, to avoid the reproduction of the instructions indefinitely as the ATM (3) may have advanced in the workflow, the following protocol applies to establish a deletion criterion.

Throughout this entire example, the message to be communicated to the user (1) as an instruction is to be a sentence, the length of which is determined by its number of letters.

The deletion protocol comprises the steps of:
- determining (175) the number of letters of the message to be communicated to the user (1) as an instruction,
- relating (176) such length of the message with a period of validity thereof by the expression *(no. letters of the message)* * *0.4 sec,* and
- deleting (177) the instructionposted in the In-Memory Database and related to such message upon its period of validity expires.

In addition, there may be an asynchronous process (*i.e.* independent from the workflow of the instructions to be followed by the user (1)) through which those messages not forwarded to the portable communications device (2) are deleted. The ATM (3) operation has a safe-time of normally 30 seconds counted from the last action performed by the user (1), such as authentication thereof, after which the ATM (3) operations performs a *'time-out'* process, *i.e.* the operations automatically ends if the instruction sent is not performed by the user(1). Therefore, the asynchronous process of deleting those messages not forwarded to the portable communications device (2) is performed after, preferably, 35 seconds.

Throughout this entire description, synchronous will be understood as dependent from the workflow of the instructions to be followed by the user (1), whilst asynchronous will be understood as independent therefrom.

### Example of cash reserve (i.e. posting a 'cash withdrawal')

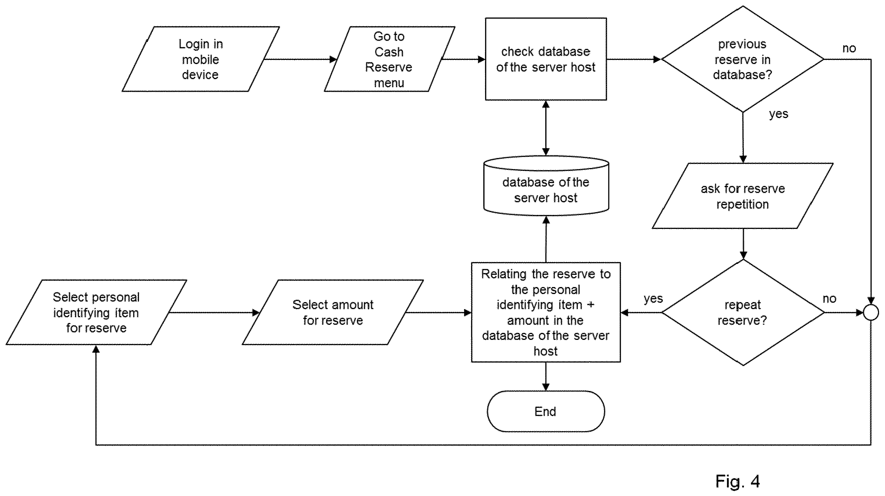

Figure 4 depicts a schematic flowchart with a particular example of the posting by the application of the portable communications device an 'operation request' to a database of the server host.

The portable communications device (2), a cellular telephone throughout this example, is configured to store and run the application (2.1) which in turn is configured to communicate the portable communications device (2) with the server host (4).

Once the application (2.1) is opened and running, the user credentials are introduced in order to access to a main page of the application (2.1) where different options are shown. Among them, the option of posting an 'operation request' is to be selected.

Please note that throughout this example, the 'operation request is a cash withdrawal. Nevertheless, other financial operations can be performed, being all understood as equivalents. This posting of an 'operation request' prompt a cash reserve in the database of the server host.

Then, the application checks whether a prior 'operation request' has been posted beforehand at a database (4.1) of the server host (4). In case a previous 'operation request' was posted and presumably the ATM already performed the cash dispensing accordingly, the application is configured to notice the user about such 'operation request' and its conditions (*e.g.* cash amount).

Therefore, the application (2.1) is configured to ask whether a repetition of the previous 'operation request' is envisaged, this is, under the same conditions.

If yes, such new 'operation request' is automatically also posted at the database (4.1) of the server host (4) in a personalized manner for such user (1) under the same conditions that the previous 'operation request'.

Otherwise, the application (2.1) asks the user (1) the conditions of this new 'operation request' to be posted. As it can be observed, the personal identifying item of the user is related to this new 'operation request' posted, so that the ATM can recognize afterwards that the owner of such personal identifying item has posted an 'operation request' in the database of the server host in a personalized manner.

Optionally, in case the application (2.1) is related to different personal identifying items of the user (i.e. different personal ATM cards), this new 'operation request' along with the conditions (*e.g.* cash amount) can be allocated to a particular personal identifying item (6) of the user.

### Example 1 of cash withdrawal

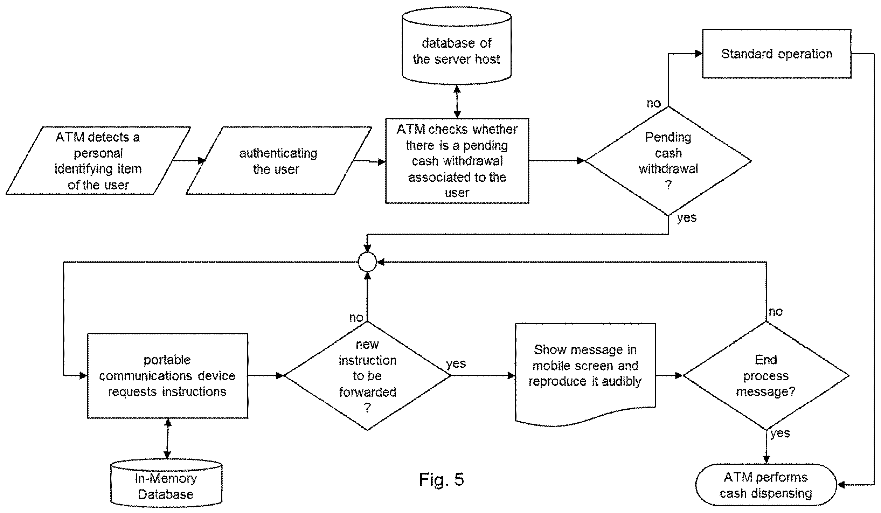

Figure 5 depicts a schematic flowchart with a particular example of the method for operating with an ATM by means of a portable communications device of a user through a communication channel.

Once the application of the portable communications device (2) has posted an 'operation request' (throughout this particular example, a 'cash withdrawal') to the database (4.1) of the server host (4), such 'operation request' remains pending. Hereinafter, the following steps are performed:
- the ATM (3) detects a personal identifying item (6) of the user (1);
- authentication of the user (1);
- the ATM (3) checks whether a pending 'operation request' (i.e. cash withdrawal) associated to the user (1) is pending within the database of the server host (4);
if an operation request associated to the user(1) is pending, a communication channel (5) between the ATM (3) and the portable communications device (2) is established, and
the ATM (3) sends instructions to be stored in an In-Memory Database (8), and the portable communications device (2) requests the instructions posted in the In-Memory Database.

As new instructions are stored in the In-Memory Database to be forwarded to the user by the portable communication device (2), those messages are shown the screen of the portable communication device (2), and optionally are reproduced audibly by the same.

If no new messages are to be forwarded, the process of communicating messages ends and the ATM dispenses the cash according to the 'cash withdrawal' order posted originally by the user.

### Example 2 of cash withdrawal

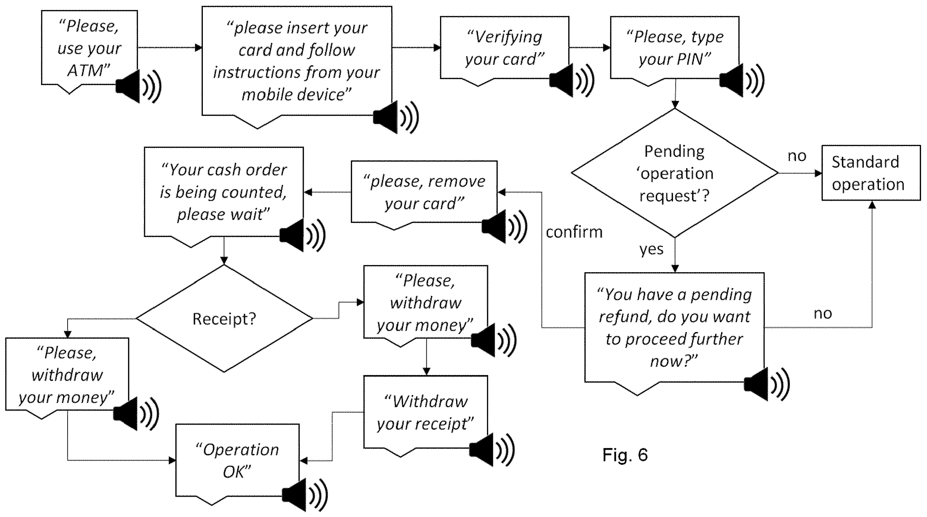

Figure 6 shows a particular example of a special workflow of instructions sent by the ATM (3) to the portable communications device (2) by the communication channel (5). The following description further particularizes the example shown in figure 2.

Prior to operate with the ATM (3), once the user (1) reaches the ATM (3) and having the application opened, the portable communication device communicates the first instruction to the user: *"please, use your ATM".*

Thereupon, the portable communication device reproduces the instruction *"please insert your card and follow instructions from your mobile device".* It is to be noted that, for illustrative purposes the portable communication device is a mobile device in this example.

The ATM is configured to expect that the user uses its personal identifying item (3), such as its personal ATM card. If the ATM detects that a personal item (6) has been used, the following informative instruction is communicate *"Verifying your card".*

Once the ATM (3) detects (130) such personal identifying item (6) of the user (1), the instruction is as follows *"please, type your PIN".*

As it can be observed, there is a decision point (150) at which depending on whether there is a pending 'operation request' associated to the user (1) in the database of the server host (4), the operation with the ATM (3) shall follow a regular procedure (152) (*i.e.* 'standard operation'), or shall require a special workflow (151).

In case there is a pending 'operation request' (in this case, a cash withdrawal) the following step is an assurance point wherein the instruction is as follows: *"You have a pending refund, do you want to proceed further now?".*

Then, the ATM (3) sends an instruction to the user (1) relating to the withdrawn of the personal ATM (3) card thereof ("*please, remove your card*"). Once the personal ATM (3) card is in possession of the user(1), there is no need for further actions to be carried out by the user(1), except the final instruction of cash withdrawal.

In between, instructions are sent to the user (1) just for informative purposes in order to keep its attention and do not confuse the proper silent. Examples are as follows: "*Operation in progress", "Your cash order is being counted, please wait*"*.*

As the ATM (3) has recognized that at least one instruction which has been has been executed, then the ATM (3) performs the operation requested (180). Accordingly, the following instruction is communicate *"Please, withdraw your money*"*.* At the end of the operation, the informative instruction *"Operation OK*" is communicated to the user in order to verify that the operation is terminated.

Optionally, in case the user(1) requests a receipt of the 'cash withdrawal', an intermediate action need to be taken from the user (1). This is, the ATM expects an action from the user in order to advance to the next step. Nonetheless, the final instruction to be followed by the user(1) shall be always related to the consumption of the 'operation request', in this example the cash withdrawal.

It is to be noted that, although figure 6 shows a set of instructions sent by the ATM (3) to the portable communications device (2) in a particular language, i.e. English, such instructions shall depend on the preferred language settle by the user in its portable communication device or the application language. Instead, in case the selected ATM to operate with is not enabling to offer the operation requested in the particular language, a default language is automatically used.

Thus, the set of instructions depicted in English throughout figure 6 are solely for illustrative purposes.

### Screen of the portable communications device (2)

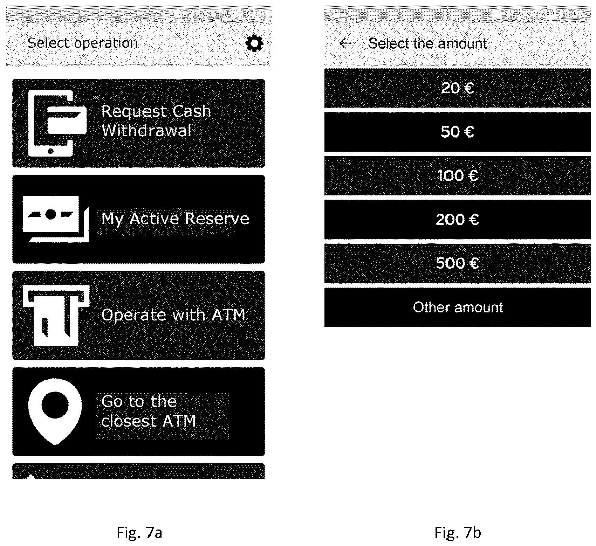

Figures 7a and 7b show an example of the screen of the portable communications device (2) with a particular lay-out and colours according to pre-established requirements of the user (1). These figures show a screenshot of the screen of the portable communications device (2) of the user when the application (2.1) is opened and running.

Particularly, figure 7a depicts the main page of the application where different options are available to select. The option *'Request Cash Withdrawal'* leads to the posting of an 'operation request' (in this particular case, to a cash withdrawal) to a database of the server host. On the contrary, the option *'Operate with ATM'* leads to the communication between the ATM and the portable communications device by the communication channel.

Other options like '*My Active Reserve'* or *'Go to the closest ATM',* lead to the backlog orders and the indication the route to a particular ATM selected, respectively.

Figure 7b depicts a particular example of the 'operation request' (i.e. the cash withdrawal) allowed by the application (2.1). As can be observed, different amounts of cash to be dispenses are listed.

It is to be noted that these examples shown in figures 7a and 7b are for illustrative purposes, thus not limiting the possibilities to display the options by the application.

In principle, the main features to be considered regarding the lay-out and colours according to pre-established requirements of the user(1) -a visual impairment user-, are as follows:
- The buttons have adaptive size; this is, self-dimensioned depending on the size of the screen of the portable communications device. The size is determined by a few dimensions so that visual impairment users can operate easily.
- The colours used should have enough contrast so that visual impairment users or users with deficiencies detecting colours can detect and discerns the different options. In particular, alternate dark backgrounds such as blue or black with light (*e.g.* white) letters are preferred.
- Icons and texts are adapted to text-to-speech conditions in such a way that they can be reproduced.

Advantageously, a user which retains a certain grade of visual ability discerns the different options present in the screen of its portable communications device.

## Claims

1. A computer-implemented method (100) for operating with an Automated Teller Machine (3), ATM, by means of a portable communications device (2) of a user (1), wherein
• the ATM (3) is configured to communicate with a server host (4),
• the portable communications device (2) is configured to send at least one instruction to the user(1) and to store and run at least one application, and
• the at least one application (2.1) is configured to communicate the portable communications device (2) with the server host (4),
the method (100) comprising the steps of:
a) posting (110) by the application of the portable communications device (2) an operation request to a database of the server host (4), wherein (120) such operation request remains pending;
b) detecting (130) by the ATM (3) a personal identifying item (6) of the user (1),
c) authenticating (140) the user (1),
d) checking (150) by the ATM (3) whether there is a pending operation request associated to the user (1) in the database of the server host (4);
wherein:
if an operation request associated to the user (1) is pending:
d1) establishing (160) a communication channel (5) between the ATM (3) and the portable communications device (2);
d2) sending (170) by the ATM (3) to the application of the portable communications device (2) and through the communication channel (5), at least one instruction to be followed by the user (1); and
if the ATM (3) recognizes that at least one instruction has been executed, then
d3) performing (180) by the ATM (3) the operation requested.

2. The method (100) according to claim 1, wherein the communication channel (5) established (160) in step d1) between the ATM (3) and the portable communications device (2) is through at least one Application Program Interface, API (7).

3. The method (100) according to any of the preceding claims, wherein step d2) further comprises the steps of:
d2.1) sending (172) by the ATM (3) the at least one instruction, such instruction being stored in an In-Memory Database (8), IMDB, as a codified digital information, and
d2.2) requesting (173) by the portable communications device (2) the codified digital information posted in the In-Memory Database.

4. The method (100) according to the preceding claim, wherein the requesting in step d2.2) is performed continuously in a "busy-wait polling" process, and synchronized with the posting of codified digital information.

5. The method (100) according to any of the preceding claims, the portable communications device (2) being configured to reproduce text-to-speech instructions and wherein step d2) further comprises
• receiving at least one text-to-speech instruction by the portable communications device (2), and
• reproducing audibly the at least one text-to-speech instruction by the portable communications device (2).

6. The method (100) according to any of the preceding claims, wherein at least one instruction sent by the ATM (3) to the portable communication device (2) is deleted (174) after a period of time is elapsed and/or in case the instruction is not sent to the portable communication device (2) in said period of time.

7. The method (100) according to any of the claims 3 to 6, wherein the step d2) further comprises the following steps in order to delete (174) at least one instruction posted in the In-Memory Database by the ATM (3):
• determining (175) the length of a message to be communicated to the user(1) as an instruction,
• relating (176) such length of the message with a period of validity thereof, and
• deleting (177) the instruction posted in the In-Memory Database and related to such message upon its period of validity expires.

8. The method (100) according to the preceding claim, wherein the length of the message to be communicated to the user (1) is determined by a number of letters of the instruction.

9. The method (100) according to any of the claims 7 or 8, wherein the codified digital information posted in the In-Memory Database is requested periodically by the portable communications device (2) within the period of validity of the message related to such instruction.

10. The method (100) according to any of the preceding claims, wherein the personal identifying item (6) of the user (1) detected in step b) by the ATM (3) is at least one of the following:
• personal ATM card,
• the application (2.1) hosted in the portable communications device (2), or
• a combination of the above personal identifying items (6).

11. The method (100) according to any of the preceding claims, wherein the authentication of the user (1) performed in step c) comprises any of the following types:
• typing a personal identification number, PIN, on a PIN pad of the ATM (3), and/or
• typing a personal identification number on a screen or keyboard of the portable communications device (2), and/or
• introducing biometric information, preferably scanning a fingerprint.

12. The method (100) according to any of the preceding claims, wherein a display of the ATM (3) and/or a screen of the portable communications device (2) is configured to switch its lay-out and colours to a particular lay-out and colours according to a pre-established requirements of the user (1).

13. The method (100) according to any of the preceding claims, wherein the method further comprises between steps a) and b), the step of:
i. indicating (111) by the application of the portable communications device (2) the geolocation of ATMs (3) and the geolocation of the portable communications device (2) itself,
ii. selecting (112) a particular ATM (3) where the financial transaction is to be performed, and
iii. calculating (113) the route according to the geolocation of the selected ATM (3) and the portable communications device (2) itself, and
iv. optionally (114) reproducing audibly the route by the portable communications device (2).

14. The method (100) according to any of the preceding claims, wherein step d2) further comprises that the ATM (3) and the portable communications device (2) comprise means to communicate by personal area networks (PANs) such as Bluetooth.

15. A data processing system comprising means for carrying out the steps of the method of any of claims 1 to 14.
